# EUROPEAN PATENT SPECIFICATION

(11) **EP 3 318 773 B1**
(45) Date of publication and mention of the grant of the patent: **17.07.2019**
(21) Application number: 16197545.3
(22) Date of filing: 07.11.2016
(51) Int. Cl.: F16C 33/50

(54) **ROLLER BEARING WITH SEGMENTED CAGE**
WÄLZLAGER MIT SEGMENTIERTEM KÄFIG
ROULEMENT À ROULEAUX À CAGE SEGMENTÉE

(43) Date of publication of application: 09.05.2018
(73) Proprietor: Aktiebolaget SKF, 41 550 Göteborg (SE)
(72) Inventor: BEYFUS, Berthold, 97535 Wasserlosen-Kaisten (DE); FRIEDRICH, Hans-Juergen, 97486 Königsberg-Römershofen (DE); RADINA, Alfred, 97711 Poppenlauer (DE); SOELLNER, Maximillian, 97494 Bundorf (DE); VOLPERT, Stefan, 97493 Bergrheinfeld (DE)
(74) Representative: Kuhstrebe, Jochen

(56) References cited:
- DE-A1- 1 575 428
- DE-A1-102013 203 382
- DE-B- 1 207 719
- DE-C- 379 363
- DE-C- 950 822
- GB-A- 1 296 976
- US-A1- 2015 098 671

## Description

The present invention relates to roller bearings and is more particularly directed to a roller bearing comprising a cage that is assembled from individual segments arranged between adjacent rollers.

### Technical Background

A bearing with a cage of this kind is known from WO 2014/095732. Each cage segment touches two rollers on at least two contact faces which are adapted to the shape of the roller, without enclosing the roller. A fastening element is arranged at each end of a segment, for enabling the segments to be interconnected by means of a coupling element such as a strap. In the disclosed examples, each segment is moulded as a single piece from cast iron or from a plastic material. GB 1 296 976 discloses a rolling bearing with a segmented cage made of sheet metal.

There is still room for improvement in terms of defining a segmented cage for a roller bearing, whereby the individual cage segments can be manufactured in a straightforward, economical manner from a material which is more flexible than cast iron and more stable than plastic.

### Summary of the Invention

The present invention resides in a roller bearing comprising an inner ring, an outer ring and a row of rollers arranged therebetween, wherein adjacent rollers are separated from each other by individual cage segments. Each segment comprises a crosspiece that extends in an axial direction of the bearing, and has first and second guide surfaces, which extend from the crosspiece in a radial direction and which are curved towards the adjacent rollers. According to the invention, each segment is made from a single piece of sheet metal. The crosspiece comprises at least one radial cut that creates first and second radial extensions, whereby the first and second guide surfaces are respectively formed by bending the first and second radial extensions in opposite transverse directions. The cage segments further comprise arms, which extend from the crosspiece in transverse (circumferential) direction and which act as spacing elements for maintaining a predefined spacing between adjacent segments. Furthermore, when two segments are placed together, a pocket is formed for the roller in between, such that end faces of the roller are also guided between axially opposite arms.

Preferably, the crosspiece comprises two or more radial cuts, to create three or more radial extensions, whereby adjacent radial extensions are bent in opposite transverse directions. In a preferred example, each segment has four radial extensions, such that each of the adjacent rollers is guided on two guide surfaces which are axially spaced from each other.

In some examples, the radial extensions extend from the crosspiece in a radially inward direction only. In other examples, radial extensions extend from the crosspiece in a radially outward direction only. In still further examples, the cage of the bearing is assembled from segments which comprise radial extensions that extend from the crosspiece in both radial directions.

Thus, the cage segments guide and separate the rollers in an effective manner, and can be produced quickly and simply by means of cutting and bending operations performed on a single piece of sheet metal. A further advantage of sheet metal is that the crosspiece has a small thickness in transverse (circumferential) direction of the bearing. This means that the number of rollers which are packed into a single row can be maximized, which is important in applications where high loads are transferred through the rollers.

Preferably, the segments are made from sheet steel. Other suitable materials include sheet brass.

The roller bearing of the invention can be a cylindrical roller bearing, a tapered roller bearing, a spherical roller bearing or any other kind of roller bearing. Depending on the type of bearing, it may be necessary for the individual cage segments to be connected to each other.

Thus, in an embodiment, each segment comprises first and second fastening elements which are provided at respective first and second axial sides of the segment, for enabling the segments to be coupled together via a coupling element. In one example, the fastening elements are executed as an eyelet and the cage segments are coupled together by a wire that is inserted though each eyelet at both sides of the segments.

In one embodiment, the bearing comprises cage segments which essentially consist of the crosspiece and radial extensions. The first and second fastening elements are then provided at respective first and second axial ends of the crosspiece.

In one example, each segment is essentially U-shaped and has first and second arms which extend from the crosspiece in the same transverse direction. In a further example, each segment is essentially Z-shaped and has first and second arms that extend from the crosspiece in opposite transverse directions. The arms are formed by bending, such that first and second axial ends of the crosspiece are provided with first and second bends.

In an embodiment, a notch is provided on the crosspiece at each of the first and second bends. The notch is adapted to receive a tip of the corresponding first or second arm of an neighbouring segment, such that the first and second arms of each segment are radially supported on a neighbouring segment. Thus, a robust cage assembly is provided in bearing applications where the cage is roller-guided.

The cage segments can also be adapted to form an assembled cage that is ring-guided. Thus in some embodiments, a radially inner surface of the first and/or second arm is guided on a radially oriented surface of the inner ring. Alternatively or additionally, a radially outer surface of the first and/or second arm is guided on a radially oriented surface of the outer ring. For example, when the bearing is a cylindrical roller bearing having an inner ring with flanges at each side of the raceway, the first and second arms of the cage segments have a contact surface on the radially inner surface which runs on the flanges during bearing operation.

Preferably, the contact surface is curved, to optimise the surface area and minimise friction.

In embodiments where the cage segments are ring-guided, an end face of the first and second arms of each segment may be adapted to bear against a counterface on a neighbouring segment. Preferably, the respective ends faces and counterfaces are complementarily shaped. In one example, the end face of the arms is convex, while the counterface on the adjacent segment is concave. The counterface may be formed on a flap that extends from the crosspiece in an opposite transverse direction from the respective first or second arm. Suitably, the flap is formed by bending a cut-out section of the respective arm, which is provided at the respective first or second bend.

Fastening elements may also be provided when the cage segments comprise arms. In one example, the first and second fastening elements are respectively provided on the first and second arms and comprise an axial extension that is formed by bending a cut-out flap provided in the respective arm. Suitably, the cut-out flap has an eyelet or other opening to enable the cage segments to be coupled together.

Depending on the embodiment, the cage segments have a number of surfaces which are in contact with the rollers or other parts of the bearing. For example, the curved guide surfaces partially surround each roller. When the segments have arms, axially oriented surfaces of the arm are in contact with the roller end faces. In some examples, therefore, contact surfaces of each segment are provided with a dimpled texture, to reduce friction. Advantageously, the dimples are provided on the sheet metal from which the cage segments are made, before bending operations are performed.

Regardless of the embodiment, the cage segments are formed from a single piece of sheet metal, which is cut and bent into the appropriate shape. The segments can thus be manufactured using a straightforward and economical process, whereby different design features, adapted for specific bearing types, are easy to execute.

Other advantages of the invention will become apparent from the following detailed description and accompanying drawings.

### Brief Description of the Drawings

- Fig. 1a, 1b: respectively show a perspective view and a top view of a first example of a cage segment that may be used to separate the rollers in a bearing according to the invention;
- Fig. 1c: is a perspective view of two assembled cage segments, of the type shown in Figs 1a and 1b;
- Fig. 2a: is a perspective view of a second example of a cage segment that may be used to separate the rollers in a bearing according to the invention;
- Fig. 2b: is a perspective view of two assembled cage segments, of the type shown in Fig. 2a;
- Fig. 3a: is a perspective view of a third example of a cage segment that may be used to separate the rollers in a bearing according to the invention;
- Fig. 3b: is a perspective view of two assembled cage segments, of the type shown in Fig. 2a;
- Fig. 3c: is a perspective view of part of a roller set separated by cage segments of the type shown in Figs 3a and 3b;
- Figure 3d: is a cross-sectional view of part of a bearing according to the invention comprising the roller set from Figure 3c.

### Detailed Description

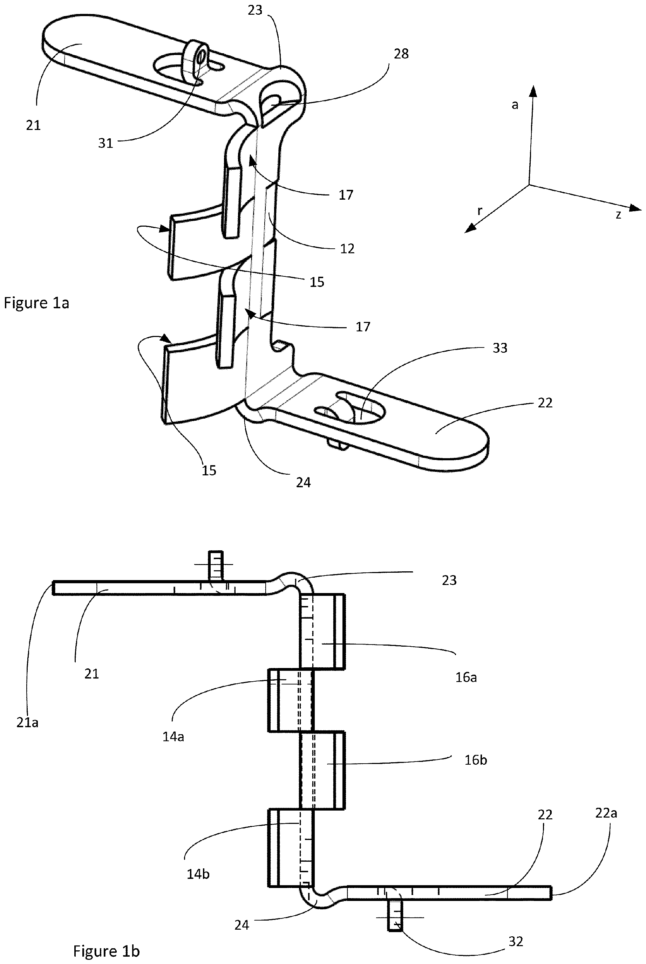

A first example of a cage segment for separating rollers in a roller bearing according to the invention is shown in Figures 1a and 1b. The segment 10 is made from a single piece of sheet metal and has a crosspiece 12, which extends in an axial direction a of the bearing. In use, the segment 10 is arranged between adjacent rollers and has a 1^{st} guide surface 15 which curves towards one of the rollers and a 2^{nd} guide surface 17 that is curved towards the other of the adjacent rollers. The first guide surface 15 is provided on a set of two first radial extensions 14a, 14b, which extend from the crosspiece 12 in radial direction r and which are curved to partly surround one roller. The second guide surface 17 is provided on a set of two second radial extensions 16a, 16b, which extend from the crosspiece 12 in radial direction r and which are curved to partly surround the adjacent roller. Suitably, the first and second guide surfaces 15, 17 have a concave curvature that is adapted to the curvature of the rollers, for optimal guidance.

The four radial extensions 14a, 14b, 16a, 16b are formed by providing three radial cuts in the crosspiece 12, whereby the first radial extensions 14a, 14b and the second radial extensions 16a, 16b are bent in opposite transverse direction z. Preferably, adjacent radial extensions are bent in opposite transverse directions, such that each of the first and second guide surfaces 15, 17 comprises two sections which are axially spaced from each other. This further improves the guidance of the rollers.

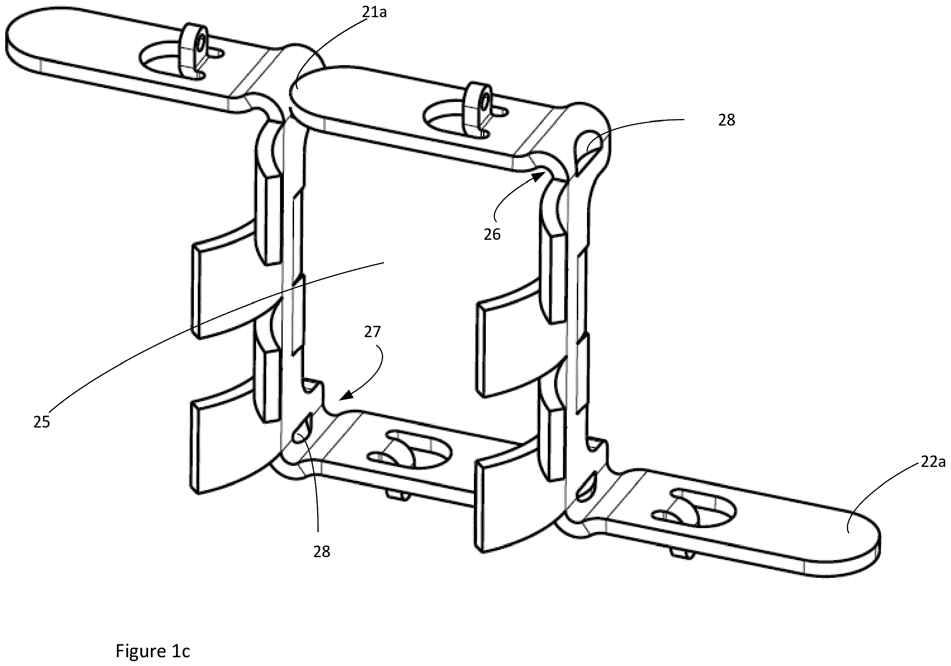

The segment also has a single first arm 21 and a single second arm 22 which extend in transverse direction z from either axial end of the crosspiece 12. As best seen in Fig. 1b, the segment is essentially Z-shaped and the first and second arms 21, 22 extend in opposite transverse directions. Referring now to Figure 1c, which shows two segments arranged next to each other, the arms act as distance elements for maintaining a predefined spacing between neighbouring segments and for creating a pocket 25 for a roller.

The first and second arms 21, 22 are formed by bending appropriately shaped sections of the sheet material from which the segment 10 is formed. The segment thus comprises first and second bends 23, 24 at either axial end. An advantage of bending is that the first and second bends can be executed with a precisely defined radius of curvature, such that corners 26, 27 of the created pocket 25 can be executed with a precisely defined radius of curvature.

In the depicted example, the first and second arms of a segment 10 are radially supported on a neighbouring segment. A notch 28 is provided at each of the first and second bends 23, 24, whereby a tip 21a of the first arm and a tip 22a of the second arm are adapted to fit into the corresponding notch 28 on a neighbouring segment. This enhances the stiffness and robustness of the assembled cage.

The stiffness of the assembled cage can be further enhanced by connecting the individual segments together via a coupling element. In the depicted example, the first and second arms 21, 22 are respectively provided with first and second fastening elements 31, 32, executed as eyelets formed in axial extensions. The axial extensions are created by bending a cut-out portion 33 in the first and second arms. Once the segments and rollers have been assembled, the segments are coupled together by threading e.g. a wire through each of the first and second fastening elements, so as to form corresponding first and second rings.

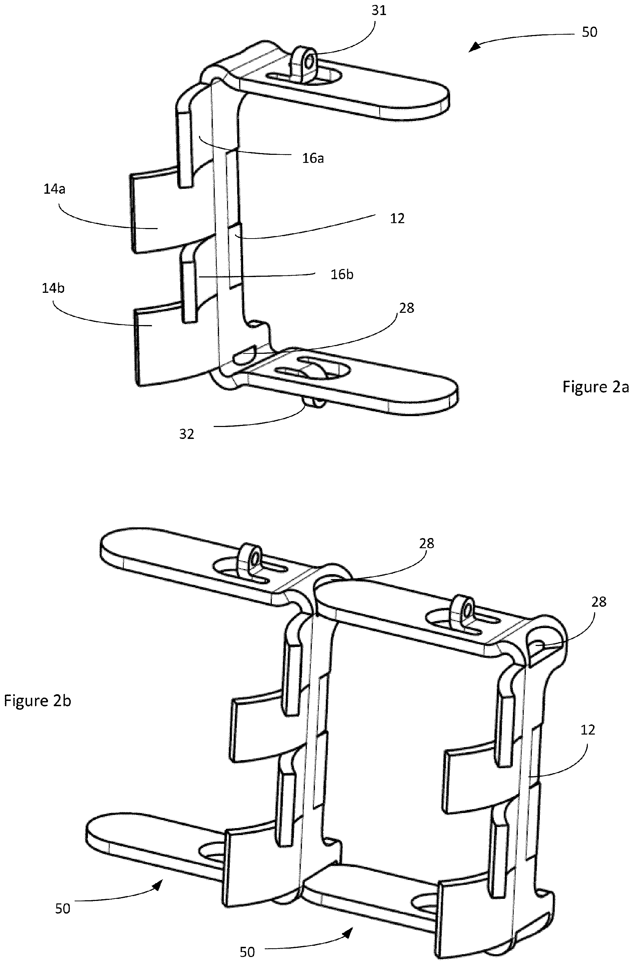

A second example of a cage segment 50 is shown in Fig 2a, whereby two neighbouring segments are shown in Figure 2b. Again, each segment is formed from a single piece of sheet metal and has oppositely oriented first and second guide surfaces provided on curved first and second radial extensions 14a, 14b, 16a, 16b that extend from the crosspiece 12. In this example, each segment 50 has one first arm 21 and one second arm 22 which extend from opposite ends of the crosspiece 12 in the same transverse direction via first and second bends 23, 24. An advantage of the resulting U-shaped cross-section, compared with the Z-shape, is that the bending operation produces relatively lower stresses in the sheet material.

Also in this embodiment, the first and second arms of each segment 50 are radially supported by means of a notch 28 provided in the first and second bends 23, 24 which receive the tip of a corresponding arm of a neighbouring segment. Furthermore, the first and second arms are respectively provided with first and second fastening elements 31, 32 for enabling the segments 50 to be coupled together.

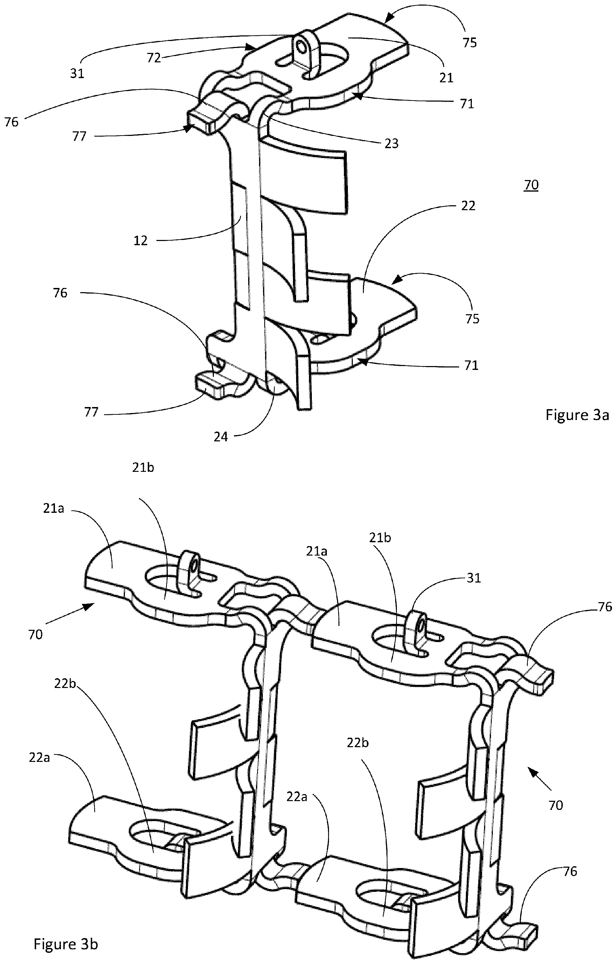

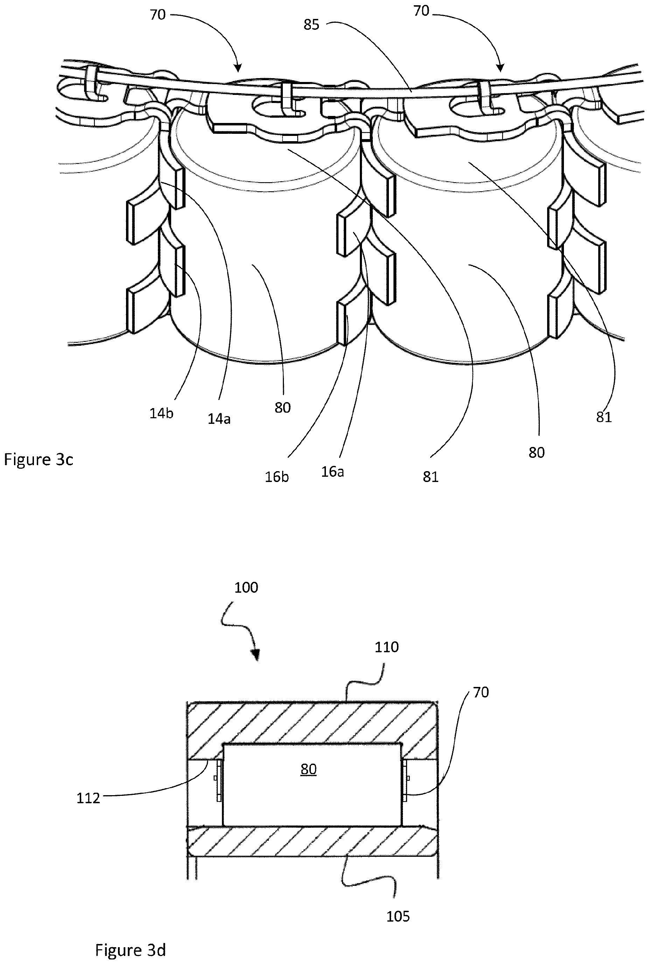

A third example of a cage segment 70 is shown in Fig 3a, whereby two neighbouring segments are shown in Figure 3b. Again, each segment is formed from a single piece of sheet metal and has oppositely oriented first and second guide surfaces provided on radial extensions that extend from the crosspiece 12. Also in this example, each segment 70 has first and second arms 21, 22 which extend from opposite ends of the crosspiece 12 in the same transverse direction via first and second bends 23, 24.

The segments 70 in this example differ from the previous examples in that the assembled cage segments are adapted to be radially supported on a shoulder of an outer ring of the bearing. The assembled cage is thus an outer-ring guided cage. The first and second arms 21, 22 comprise a central portion 21b, 22b that is relatively thicker than a tip potion 21a, 22a of the respective arm. Each central portion has an outer surface 71, which in use of the bearing, is in contact with a radially inner surface of the outer ring. Preferably, the outer surface is arc-shaped, to reduce the contact surface area. Suitably, an inner surface 72 of the central portion 21b, 22b has the same shape, such that the cage segments are also suitable for bearings where the assembled cage is guided on the inner ring.

Also in this embodiment, the first and second arms serve as distance elements for maintaining a predefined spacing of neighbouring cage segments. An end face 75 of the arms 21, 22 bears against a counterface 77 on a neighbouring segment. In the depicted example, the counterface 77 is an end face of a flap 76 that extends in opposite transverse direction from the arm 21, 22. The flap is created by bending a cut-out section provided in the first and second bends 23, 24. Preferably, each end face 75 and its counterface 77 are complementarily shaped. For example, the end face 75 of each arm may be concave, while the counterface 77 is correspondingly convex. A solid contact interface can thus be created.

Furthermore, for bearing types where it is advantageous for the segments to be coupled together, the first and second arms may be provided with first 31 and second (not visible) fastening elements for enabling the segments 70 to be coupled together.

A portion of a roller set and coupled cage segments 70 is shown in Figure 3c. The rollers 80 are partially surrounded and guided by first radial extensions 14a, 14b of one cage segment and second radial extensions 16a, 16b of a neighbouring cage segment. Each end face 81 of the rollers is also guided between the arms of a segment, which are coupled together by a wire 85 in the depicted example.

Part of a bearing comprising the roller set and coupled cage segments is shown in Figure 3c. The outer ring 110 of the bearing 100 comprises a shoulder 112 which radially guides each of the segments 70. In other examples, where an inner ring 105 of the bearing is designed with a rim or flange, the cage segments may be guided on the inner ring. In still other examples, the segments may be guided on both rings.

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims.

## Claims

1. A roller bearing (100) comprising an inner ring (105), and outer ring (110) and a row of rollers (80) arranged therebetween, wherein adjacent rollers are separated from each other by individual cage segments (10, 50, 70), each segment comprising a crosspiece (12) that extends in an axial direction (a) of the bearing, and first and second guide surfaces (15, 17), which extend from the crosspiece in a radial direction (r) and which are curved towards adjacent rollers (80), wherein
- each segment is made from a single piece of sheet metal;
- **characterized in that**
the crosspiece (12) comprises at least one radial cut that creates first (14a, 14b) and second (16a, 16b) radial extensions;
- the first and second guide surfaces are respectively formed by bending the first and second radial extensions in opposite transverse directions (z); and
- each segment further comprises first and second arms (21, 22) that extend and are bended in transverse (circumferential) direction from the crosspiece (12) via first and second bends (23, 24), respectively, provided at opposite axial ends of the crosspiece.

2. The roller bearing of claim 1, wherein the crosspiece (12) comprises three or more radial extensions (14a, 14b, 16a, 16b), whereby adjacent radial extensions are bent in opposite transverse directions.

3. The roller bearing of claim 1 or 2, wherein the first and second radial extensions (14a, 14b, 16a, 16b) extend from the crosspiece in a radially inward and/or radially outward direction.

4. The roller bearing of any preceding claim, wherein the segments (10, 50, 70) comprise first and second fastening elements (31, 32) respectively provided at first and second axial sides of the segment, for enabling the segments to be coupled together via a coupling element (85).

5. The roller bearing of any preceding claim, wherein the first and second arms (21, 22) of each segment (50, 70) extend in the same transverse direction.

6. The roller bearing of any preceding claim, wherein the first and second arms of each segment (10) extend in opposite transverse directions.

7. The roller bearing of any preceding claims, wherein a notch (28) is provided on the crosspiece (12) at each of the first and second bends (23, 24), whereby the notch receives a tip (21a, 22a) of the respective first and second arm (21, 22) of a neighbouring segment, such that the first and second arms of each segment (10, 50) are radially supported on a neighbouring segment and such that the segments have a predefined spacing with respect to each other.

8. The roller bearing of any preceding claim, wherein a radially inner surface (72) of the first and/or second arm (21, 22) is guided on a radially oriented surface of the inner ring (105).

9. The roller bearing of any preceding claim, wherein a radially outer surface (71) of the first and/or second arm (21, 22) is guided on a radially oriented surface of the outer ring (110).

10. The roller bearing of any preceding claim, wherein an end face (75) of the first and second arms (21, 22) of each segment bears against a counterface (77) on a neighbouring segment.

11. The roller bearing of claim 10, wherein respective end faces (75) and counterfaces (77) are complementarily shaped.

12. The roller bearing of claim 10 or 11, wherein the counterface (77) is formed on a flap (76) that extends from the crosspiece (12) in an opposite transverse direction from the respective first or second arm (21, 22), whereby the flap (76) is formed by bending a cut-out section of the respective arm, provided at the respective first or second bend (23, 24).

13. The roller bearing of any of claims 4 to 12, wherein the first and second fastening (31, 32) elements are respectively provided on the first and second arms (21, 22) and comprise an axial extension that is formed by bending a cut-out portion (33) provided in the respective arm.

14. The roller bearing of any preceding claim, wherein a contact surface of one or more cage segments, which surface makes contact with a roller (80) during bearing operation, is provided with a dimpled texture.

## Patentansprüche

1. Wälzlager (100) umfassend einen Innenring (105), und einen Außenring (110) und eine dazwischen angeordnete Reihe von Rollen (80), wobei benachbarte Rollen durch einzelne Käfigsegmente (10, 50, 70) voneinander getrennt sind, wobei jedes Segment einen Steg (12), der sich in einer axialen Richtung (a) des Lagers erstreckt, und erste und zweite Führungsflächen (15, 17), die sich vom Steg in einer radialen Richtung (r) erstrecken und die zu benachbarten Rollen (80) hin gekrümmt sind, umfasst, wobei
- jedes Segment aus einem einzigen Stück Metallblech gefertigt ist;
- **dadurch gekennzeichnet, dass** der Steg (12) zumindest einen radialen Schnitt umfasst, der erste (14a, 14b) und zweite (16a, 16b) radiale Erstreckungen erzeugt;
- die erste und die zweite Führungsfläche jeweils durch Biegen der ersten und zweiten radialen Erstreckungen in entgegengesetzte Querrichtungen (z) ausbildet sind; und
- jedes Segment ferner einen ersten und einen zweiten Arm (21, 22) umfasst, die sich in Quer- (Umfangs-) Richtung vom Steg (12) über eine erste bzw. eine zweite Beugung (23, 24), die an entgegengesetzten Enden des Stegs bereitgestellt sind, erstrecken und gebogen sind.

2. Wälzlager nach Anspruch 1, wobei der Steg (12) drei oder mehr radiale Erstreckungen (14a, 14b, 16a, 16b) umfasst, wobei benachbarte radiale Erstreckungen in entgegengesetzte Querrichtungen gebogen sind.

3. Wälzlager nach Anspruch 1 oder 2, wobei sich die ersten und die zweiten radialen Erstreckungen (14a, 14b, 16a, 16b) vom Steg in einer radial einwärtigen Richtung und/oder radial auswärtigen Richtung erstrecken.

4. Wälzlager nach einem der vorangehenden Ansprüche, wobei die Segmente (10, 50, 70) ein erstes und ein zweites Befestigungselement (31, 32) umfassen, die an einer ersten bzw. einer zweiten axialen Seite des Segments bereitgestellt sind, um zu ermöglichen, dass die Segmente über ein Kopplungselement (85) miteinander gekoppelt werden.

5. Wälzlager nach einem der vorangehenden Ansprüche, wobei sich der erste und der zweite Arm (21, 22) jedes Segments (50, 70) in derselben Querrichtung erstrecken.

6. Wälzlager nach einem der vorangehenden Ansprüche, wobei sich der erste und der zweite Arm jedes Segments (10) in entgegengesetzte Querrichtungen erstrecken.

7. Wälzlager nach einem der vorangehenden Ansprüche, wobei am Steg (12) an jeder der ersten und zweiten Biegung (23, 24) eine Kerbe (28) bereitgestellt ist, wobei die Kerbe eine Spitze (21a, 22a) des ersten bzw. zweiten Arms (21, 22) eines Nachbarsegments aufnimmt, sodass der erste und der zweite Arm jedes Segments (10, 50) radial auf einem Nachbarsegment getragen werden und sodass die Segmente einen vorbestimmten Abstand in Bezug aufeinander aufweisen.

8. Wälzlager nach einem der vorangehenden Ansprüche, wobei eine radial innere Fläche (72) des ersten und/oder zweiten Arms (21, 22) an einer radial ausgerichteten Fläche des Innenrings (105) geführt wird.

9. Wälzlager nach einem der vorangehenden Ansprüche, wobei eine radial äußere Fläche (71) des ersten und/oder zweiten Arms (21, 22) an einer radial ausgerichteten Fläche des Außenrings (110) geführt wird.

10. Wälzlager nach einem der vorangehenden Ansprüche, wobei eine Endfläche (75) des ersten und zweiten Arms (21, 22) jedes Segments an einer Gegenfläche (77) an einem Nachbarsegment anliegt.

11. Wälzlager nach Anspruch 10, wobei jeweilige Endseiten (75) und Gegenflächen (77) komplementär geformt sind.

12. Wälzlager nach Anspruch 10 oder 11, wobei die Gegenfläche (77) an einer Lasche (76) ausgebildet ist, die sich vom Steg (12) in einer entgegengesetzten Querrichtung vom ersten bzw. zweiten Arm (21, 22) erstreckt, wobei die Lasche (76) durch Biegen eines Ausschnittsabschnitts des jeweiligen Arms, der an der ersten bzw. zweiten Biegung (23, 24) bereitgestellt ist, ausgebildet ist.

13. Wälzlager nach einem der Ansprüche 4 bis 12, wobei das erste und das zweite Befestigungselement (31, 32) am ersten bzw. zweiten Arm (21, 22) bereitgestellt sind und eine axiale Erstreckung umfassen, die durch Biegen eines im jeweiligen Arm bereitgestellten Ausschnittsabschnitts (33) ausgebildet ist.

14. Wälzlager nach einem der vorangehenden Ansprüche, wobei eine Kontaktfläche eines oder mehrerer Käfigsegmente, deren Fläche während des Lagerbetriebs mit einer Rolle (80) in Kontakt steht, mit einer mit Vertiefungen versehenen Textur bereitgestellt ist.

## Revendications

1. Roulement à rouleaux (100) comprenant une bague interne (105), une bague externe (110) et une rangée de rouleaux (80) disposés entre elles, des rouleaux adjacents étant séparés les uns des autres par des segments de cage individuels (10, 50, 70), chaque segment comprenant une pièce transversale (12) qui s'étend dans une direction axiale (a) du roulement, et des première et deuxième surfaces de guidage (15, 17) qui s'étendent depuis la pièce transversale dans une direction radiale (r) et qui sont incurvées vers des rouleaux adjacents (80),
- chaque segment étant fabriqué à partir d'une pièce de tôle métallique unique ;
- **caractérisé en ce que** la pièce transversale (12) comprend au moins une découpe radiale qui crée des premières (14a, 14b) et deuxièmes (16a, 16b) extensions radiales ;
- les première et deuxième surfaces de guidage sont respectivement formées en courbant les première et deuxième extensions radiales dans des directions transversales opposées (z) ; et
- chaque segment comprend en outre des premier et deuxième bras (21, 22) qui s'étendent et qui sont courbés dans une direction transversale (circonférentielle) depuis la pièce transversale (12) par le biais de première et deuxième courbures (23, 24), respectivement, prévues au niveau d'extrémités axiales opposées de la pièce transversale.

2. Roulement à rouleaux selon la revendication 1, dans lequel la pièce transversale (12) comprend trois ou plus de trois extensions radiales (14a, 14b, 16a, 16b), des extensions radiales adjacentes étant courbées dans des directions transversales opposées.

3. Roulement à rouleaux selon la revendication 1 ou 2, dans lequel les première et deuxième extensions radiales (14a, 14b, 16a, 16b) s'étendent depuis la pièce transversale dans une direction radialement orientée vers l'intérieur et/ou radialement orientée vers l'extérieur.

4. Roulement à rouleaux selon l'une quelconque des revendications précédentes, dans lequel les segments (10, 50, 70) comprennent des premier et deuxième éléments d'attache (31, 32) prévus respectivement au niveau de premier et deuxième côtés axiaux du segment, pour permettre aux segments d'être accouplés les uns aux autres par le biais d'un élément d'accouplement (85).

5. Roulement à rouleaux selon l'une quelconque des revendications précédentes, dans lequel les premier et deuxième bras (21, 22) de chaque segment (50, 70) s'étendent dans la même direction transversale.

6. Roulement à rouleaux selon l'une quelconque des revendications précédentes, dans lequel les premier et deuxième bras de chaque segment (10) s'étendent dans des directions transversales opposées.

7. Roulement à rouleaux selon l'une quelconque des revendications précédentes, dans lequel une encoche (28) est prévue sur la pièce transversale (12) au niveau de chacune des première et deuxième courbures (23, 24), l'encoche recevant une pointe (21a, 22a) du premier et du deuxième bras (21, 22) respectif d'un segment adjacent, de telle sorte que le premier et le deuxième bras de chaque segment (10, 50) soient supportés radialement sur un segment adjacent et de telle sorte que les segments aient un espacement prédéfini les uns par rapport aux autres.

8. Roulement à rouleaux selon l'une quelconque des revendications précédentes, dans lequel une surface radialement interne (72) du premier et/ou du deuxième bras (21, 22) est guidée sur une surface orientée radialement de la bague interne (105) .

9. Roulement à rouleaux selon l'une quelconque des revendications précédentes, dans lequel une surface radialement externe (71) du premier et/ou du deuxième bras (21, 22) est guidée sur une surface orientée radialement de la bague externe (110) .

10. Roulement à rouleaux selon l'une quelconque des revendications précédentes, dans lequel une face d'extrémité (75) du premier et du deuxième bras (21, 22) de chaque segment presse contre une face conjuguée (77) sur un segment adjacent.

11. Roulement à rouleaux selon la revendication 10, dans lequel des faces d'extrémité (75) respectives et des faces conjuguées (77) présentent des formes complémentaires.

12. Roulement à rouleaux selon la revendication 10 ou 11, dans lequel la face conjuguée (77) est formée sur un volet (76) qui s'étend depuis la pièce transversale (12) dans une direction transversale opposée depuis le premier ou le deuxième bras respectif (21, 22), le volet (76) étant formé en courbant une section découpée du bras respectif, prévue au niveau de la première ou de la deuxième courbure (23, 24) respective.

13. Roulement à rouleaux selon l'une quelconque des revendications 4 à 12, dans lequel le premier et le deuxième élément d'attache (31, 32) sont prévus respectivement sur le premier et le deuxième bras (21, 22) et comprennent une extension axiale qui est formée en courbant une portion découpée (33) prévue dans le bras respectif.

14. Roulement à rouleaux selon l'une quelconque des revendications précédentes, dans lequel une surface de contact d'un ou de plusieurs segments de cage, laquelle surface vient en contact avec un rouleau (80) au cours de l'opération de roulement, est pourvue d'une texture moletée.
